# EUROPEAN PATENT APPLICATION

(11) **EP 2 952 457 A1**
(43) Date of publication of application: **09.12.2015**
(21) Application number: 14001979.5
(22) Date of filing: 06.06.2014
(51) Int. Cl.: B65G 67/08, B65G 21/14

(54) **Extendable conveyor comprising a work platform equipped with an inclination system**

(71) Applicant: Caljan Rite-Hite ApS, 8361 Hasselager (DK)
(72) Inventor: Anders Stougaard Baek, 8000 Aarhus C (DK)
(74) Representative: Samson & Partner Patentanwälte mbB

(57) **Abstract**

An extendable conveyor for conveying articles has:
a base unit (2);
at least one mechanically extendable section (3a, 3b, 4), which is adjustably positionable incrementally between a fully nested position within the base unit (2) and a fully extended position telescoped forwardly from the base unit (2), wherein one of the at least one mechanically extendable section (3a, 3b, 4) is an outmost mechanically extendable section (4);
a frame (5) to which the base unit (2) is connected and which is adapted to adjust an inclination of the base unit (2) and of the at least one mechanically extendable section (3a, 3b, 4);
a conveying surface (6) for conveying articles extending at least partially on an upper side of the at least one mechanically extendable section (3a, 3b, 4);
a platform (8), which is connected to the outmost mechanically extendable section (4); and
an inclination adjuster (9) adapted to adjust the inclination of the platform (8) with respect to the inclination of the outmost mechanically extendable section (4).

## Description

### FIELD OF THE INVENTION

The present invention relates generally to conveyors and, more particularly, to extendable conveyors for conveying articles having a platform.

### BACKGROUND OF THE INVENTION

The loading and unloading of packages from truck trailers or the like is typically a physically challenging task for which typically extendable conveyors are used.

Extendable conveyors, such as known from WO 2006/068443 A1 and DE 10 2010 005 267 A1, have a base unit and multiple extendable conveyor sections which are nested within each other. The total length of the extendable conveyor can be adjusted by extending or retracting the nested extendable conveyor sections. The end of the extendable conveyor, i.e. the outmost extendable conveyor section, can move, for example, into a truck at a loading dock for loading or unloading goods. Such known extendable conveyors usually have a control panel at the front end of the extendable conveyor for controlling the conveyor.

The control panel at the front end typically allows to control the extendable conveyor, in particular to start and stop conveying of articles in order to load or unload articles, e.g. from a truck. Moreover, such a control typically allows to control the extension of the extendable conveyor.

However, personnel controlling the extension of the extendable conveyor with a control located, for example, at an outmost end of the conveyor has to carefully observe and follow the movement the extendable conveyor.

It is an object of the present invention to provide an extendable conveyor which at least partially overcomes this disadvantages of the known extendable conveyors.

### SUMMARY OF THE INVENTION

According to a first aspect the invention provides an extendable conveyor for conveying articles, comprising: a base unit; at least one mechanically extendable section, which is adjustably positionable incrementally between a fully nested position within the base unit and a fully extended position telescoped forwardly from the base unit, wherein one of the at least one mechanically extendable section is an outmost mechanically extendable section; a frame to which the base unit is connected and which is adapted to adjust an inclination of the base unit and of the at least one mechanically extendable section; a conveying surface for conveying articles extending at least partially on an upper side of the at least one mechanically extendable section; a platform, which is connected to the outmost mechanically extendable section; and an inclination adjuster adapted to adjust the inclination of the platform with respect to the inclination of the outmost mechanically extendable section.

Further aspects of the invention are set forth in the dependent claims, the following description of preferred embodiments and the drawings illustrating of preferred embodiments.

### BRIEF DESCRIPTION OF THE DRAWINGS

Embodiments of the present invention are explained by way of example with respect to the accompanying drawings, in which:
Fig. 1a illustrates in a side view an embodiment of an extendable conveyor having a platform at its outmost end in accordance with the present invention in different working positions;
Fig. 1b illustrates the extendable conveyor of Fig. 1 in a parking position;
Fig. 2a illustrates the outmost end of the extendable conveyor with the platform in a top view;
Fig. 2b illustrates the outmost end of the extendable conveyor with the platform in a side view;
Fig. 3 illustrates the outmost end of the extendable conveyor with the platform in a three dimensional view;
Fig. 4a illustrates in a side view the outmost end of the extendable conveyor with the platform in an operation position where the extendable conveyor is inclined and the platform is are horizontally aligned;
Fig. 4b illustrates in a side view the outmost end of the extendable conveyor with the platform in an operation position where both the platform and the extendable conveyor are horizontally aligned;
Fig. 5a illustrates side elements of the platform in an operating position; and
Fig. 5b illustrates side elements of the platform in a parking position.

### DETAILED DESCRIPTION OF PREFERRED EMBODIMENTS

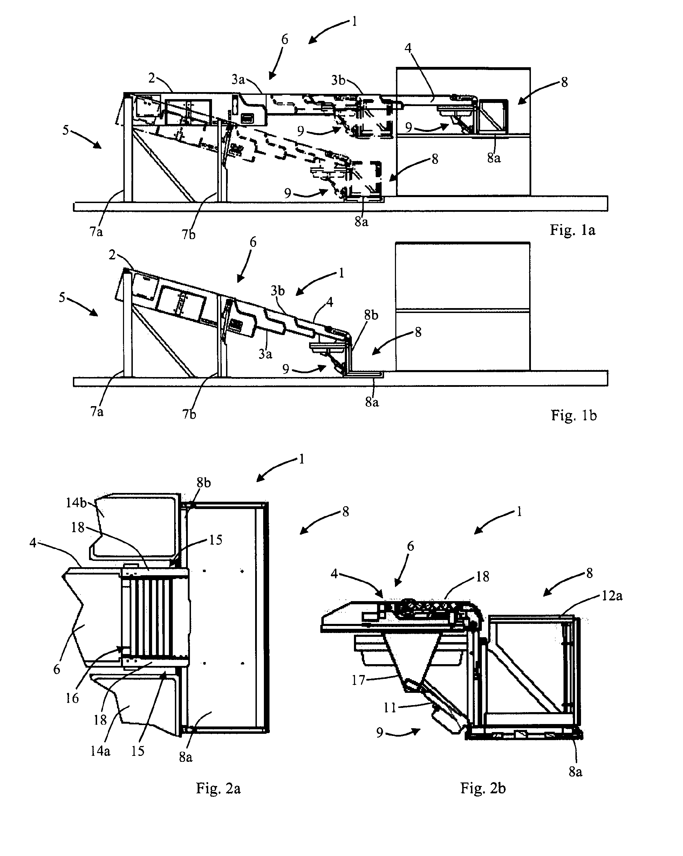

Figs. 1a and 1b illustrate an embodiment of an extendable conveyor 1 in accordance with the present invention. Before presenting a detailed description of the preferred embodiments, some general explanations are made.

As mentioned in the outset, known extendable conveyors, typically have a base unit and multiple extendable conveyor sections which are nested within each other. The total length of the extendable conveyor can be adjusted by extending or retracting the nested extendable conveyor sections. The end of the extendable conveyor, i.e. the outmost extendable conveyor section, can move, for example, into a truck at a loading dock for loading or unloading goods. Such known extendable conveyors usually have a control panel at the front end (outmost end) of the extendable conveyor for controlling the conveyor.

The control panel at the front end typically allows to control the extendable conveyor, in particular to start and stop conveying of articles, in order to load or unload articles, e.g. from a truck. Moreover, as mentioned in the outset, such a control typically allows to control the extension of the extendable conveyor.

The inventors have recognized the benefit of a platform, such as a working platform, at the front end of the extendable conveyor such that personnel can stand on the platform for operating the extendable conveyor and/or for (un)loading articles.

Due to the uncomfortable environment typically surrounding the working area of an extendable conveyor, it might also be difficult in future to attract people to work in the (un)loading zone at the extendable conveyor. Moreover, (un)loading zones are typically cramped and hazardous and, thus, the risk that personnel gets hurt is high.

The inventors have also recognized that the comfort for personnel loading and unloading articles can be improved when the extendable conveyor includes at its end a platform on which personnel can stand, operate the extendable conveyor and/or (un)load articles.

In the embodiments, an extendable conveyor for conveying articles comprises:
a base unit,
at least one mechanically extendable section, which is adjustably positionable incrementally between a fully nested position within the base unit and a fully extended position telescoped forwardly from the base unit, wherein one of the at least one mechanically extendable section is an outmost mechanically extendable section,
a frame to which the base unit is connected and which is adapted to adjust an inclination of the base unit and of the at least one mechanically extendable section;
a conveying surface for conveying articles extending at least partially on an upper side of the at least one mechanically extendable section;
a platform, which is connected to the outmost mechanically extendable section; and
an inclination adjuster adapted to adjust the inclination of the platform with respect to the inclination of the outmost mechanically extendable section.

The base unit can be suspended in the frame. For example, a rear end of the base unit at which no mechanically extendable section is attached can be fix suspended at the frame, while a front end of the base being opposite to the rear end can be height adjustable suspended at the frame. Thereby, the height of the front end of the base unit can be adjusted. The rear end can be pivotable suspended at the frame, such that the rear end pivots when the height of the front end is adjusted. By adjusting the height of the front end of the base unit an inclination of the base unit and the at least one mechanically extendable section is adjusted.

In some embodiments, the base unit and/or the frame is configured to be moveable on the floor in the direction of the mechanically extendable sections and/or transversely to this direction.

The height of the front end of the base unit can be adjusted, for example, with a beam at which the front end of the base unit is suspended. The beam can be height adjusted, for example, with a hydraulic system, pneumatic system or the like as it is known to the skilled person.

The conveying surface extends at least partially on an upper side of the at least one mechanically extendable section. In some embodiments the conveying surface also extends on the base unit. As known to the skilled person, the conveying surface can be formed by a belt or multiple rollers or the like. In the case of an extendable roller conveyor, in some embodiments, the conveyor is inclined during unloading such that articles are conveyed in the direction of the base unit due to gravitation force.

In some embodiments, the extendable conveyor comprises two or more mechanically extendable sections, which are nested within each other and are disposed in a telescopic manner, such that they are adjustably positionable incrementally between a fully nested position within the base unit and a fully extended position telescoped forwardly from the base unit. The last mechanically extendable section at the end opposite to the base unit is also referred to as the outmost mechanically extendable section in the following (or briefly "outmost section"). The mechanically extendable sections between the base unit and the outmost mechanically extendable section are also referred to as intermediate mechanically extendable sections in the following (or briefly "intermediate section"). In embodiments where the extendable conveyor only comprises one mechanically extendable section, the "intermediate" and the "outmost" mechanically extendable section are the same.

Typically, the mechanically extendable sections can be moved via a motor drive located in the base unit and, e.g. drive chains, interconnecting the sections with each other such that all mechanically extendable sections can perform a telescopic movement by driving the motor drive accordingly. The telescopic movement mechanic of an extendable conveyor is generally known to the skilled person.

The platform can be pivotable connected to the outmost mechanically extendable section. For example, the outmost section can include a frame or the like to which the platform can be pivotable attached.

The platform can include a bottom and, additionally, a front, and/or side elements, as also discussed below. It can be configured as a working platform for personnel.

The inclination adjuster adapts the inclination of the platform with respect to the inclination of the outmost mechanically extendable section. For instance, the inclination of the platform can be such adjusted that the platform has the same inclination (or degree of inclination) independently from the inclination of the outmost section, such that, for example, the bottom of the platform is adjusted to be horizontal independent from the inclination of the outmost section to which the platform is connected. The platform can also have a predefined inclination with respect, for example, to the ground such that the predefined inclination is kept independent from the inclination of the outmost section.

Hence, when the inclination of the base unit and the at least one mechanically extendable conveyor section is adjusted, the inclination adjuster also adjusts the inclination of the platform in accordance with a presetting, e.g. to keep the platform horizontal.

In some embodiments, the adjustment of the inclination of the base unit and mechanically extendable conveyor sections and the adjustment of the inclination of the platform is (automatically) carried out simultaneously, such that the platform is hold at a predefined inclination (e.g. horizontal) during adjustment of the inclination of the base unit and mechanically extendable conveyor sections and the adjustment of the inclination of the platform.

Hence, in some embodiments the inclination adjuster is adapted to adjust the inclination of the platform in (nearly) a horizontal orientation, irrespective which inclination the outmost section has. Thereby, personnel can safely stand on the platform also in cases where the extendable conveyor is inclined.

The inclination adjuster can include an inclination sensor adapted to detect a deviation from a horizontal alignment of the platform and/or of the base unit and/or of at least one of the at least one mechanically extendable sections.

The inclination sensor can include a gyro sensor and/or a tilt sensor or any other type of sensor which is capable of detecting an inclination.

Generally, the inclination sensor can be located at any part of the extendable conveyor which is inclined in correspondence to the inclination of the base unit and the at least one mechanically extendable section, respectively. In some embodiments, the inclination sensor is located at the platform and, thus, can directly detect the inclination of the platform itself. In embodiments, where the inclination sensor is not located at the platform, the inclination of the platform can be indirectly determined, for example, on the basis of the knowledge of the angle between the platform and the outmost section to which the platform is mounted and the inclination detected by the inclination sensor.

In some embodiments, the inclination adjuster includes a control which is located together with the inclination sensor in a housing at the platform. The control can include a processor (e.g. a microprocessor), and a memory. The control can be connected to the inclination sensor and receives and processes signals received from the inclination sensor in order to adjust the inclination of the platform accordingly.

The inclination adjuster can include an actuator adapted to adjust an angle between the platform and the outmost mechanically extendable section. The actuator can include a linear actuator which can be driven electrically, hydraulically and/or pneumatically or the like.

The actuator can be connected to the outmost section and the platform and it can be define an angle between the outmost section and the platform on the basis of its extension in a length direction. Thus, by adjusting the length of the actuator also the angle between the outmost section and the platform, and thereby the inclination of the platform can be adjusted.

In some embodiments, the inclination adjuster (e.g. the control of the inclination adjuster) is adapted to control the actuator in response to the deviation from a horizontal alignment detected by the inclination sensor. The inclination sensor can output a respective inclination signal which directly or indirectly represents a deviation from a horizontal alignment. The inclination adjuster receives the inclination signal and controls the actuator such that, for example, the detected deviation is compensated and the platform is kept horizontally (or at a predefined inclination).

In some embodiments, the platform includes at least one side element. The side element extends vertically from the bottom of the platform and, thus, builds a barrier for personnel standing on the platform hindering personnel from falling off the platform.

The at least one side element can be pivotable from a working position into a parking position. In the working position it forms a side wall of the platform, while in the parking position it is, for example, parallel to a rear element of the platform, such that the sides of the platform are not limited by the side elements. Thereby, the bottom of the platform can be moved in places which have a height which is lower than the height of the side elements. Moreover, personnel can also enter the platform from the side, when the at least one side element is in its parking position.

In some embodiments, the platform includes two side elements, wherein on each side of the platform one side element is located. The side elements define a working gap when being in the parking position. The working gap can be adapted to a width of the conveying surface. Thereby, the side elements do not hinder personnel (un)loading articles when the side elements are in its parking position. Moreover, the side elements typically have such a distance to each other that they can be pivoted from their operating to their parking position without being hindered by a worker standing on the platform.

In some embodiments, the platform includes at least one storage bin. The storage bin can be attached to a rear wall of the platform and it can be adapted to receive tools or other items personnel uses/needs when working on the platform.

In some embodiments, the outmost mechanically extendable section includes a (conveyor) control adapted to control the extension and/or the inclination of the base unit and the at least one mechanically extendable section. The control can be such located at the outmost mechanically extendable section that it can be operated from the platform, e.g. by personnel standing on the platform. Hence, personnel standing on the platform does not have to follow the movement of the extendable conveyor, but the platform moves together with the outmost section. As personnel can operate the extendable conveyor while standing on the platform there is also no risk that personnel is hurt by a movement of the extendable conveyor.

In some embodiments, lights are located at the platform and/or at the outmost end in order to illuminate the platform.

Returning to Figs. 1a and 1b there is illustrated an embodiment of an extendable conveyor 1 in accordance with the present invention. The extendable conveyor 1 has a base unit 2 and multiple mechanically extendable sections 3a, 3b, 4, namely two intermediate sections 3a and 3b and an outmost section 4, which are mechanically extendable and which are nested within each other, as also explained above. A conveying surface in the form of a belt 6 extends over all mechanically extendable sections 3a, 3b and 4. The belt 6 is driven by a belt drive located in the base unit 2.

Fig. 1a illustrates the extendable conveyor 1 telescopically extended and in two different operating positions, while Fig. 1b illustrates the extendable conveyor 1 retracted and in a parking position.

The base unit 2 is suspended in a frame 5. A rear end of the base unit 2 is pivotable suspended in a rear suspension 7a of the frame and a front end of the base unit 2 is suspended in a front suspension 7b of the frame. The front suspension 7b is adapted to adjust the height such that it also adjusts the height of the base unit 2 and, thus, also the inclination of the extendable conveyor 1, i.e. of the base unit 2 and the intermediate sections 3a and 3b and the outmost section 4. By adjusting the height of the base unit 2, the base unit 2 pivots around a horizontal axis at the suspension of the rear suspension 7a of the frame 5.

An inclination adjustable platform, such as a gyro platform 8 is attached at a pivot joint at the outmost section 4 of the extendable conveyor 1. The gyro platform 8 is kept in a horizontal orientation by an inclination adjuster 9, which will be described in further detail below. As can be taken from Figs. 1a and 1b, the gyro platform 8 is kept horizontally independent from the inclination of the base unit 2 and the intermediate 3a and 3b and outmost sections 4.

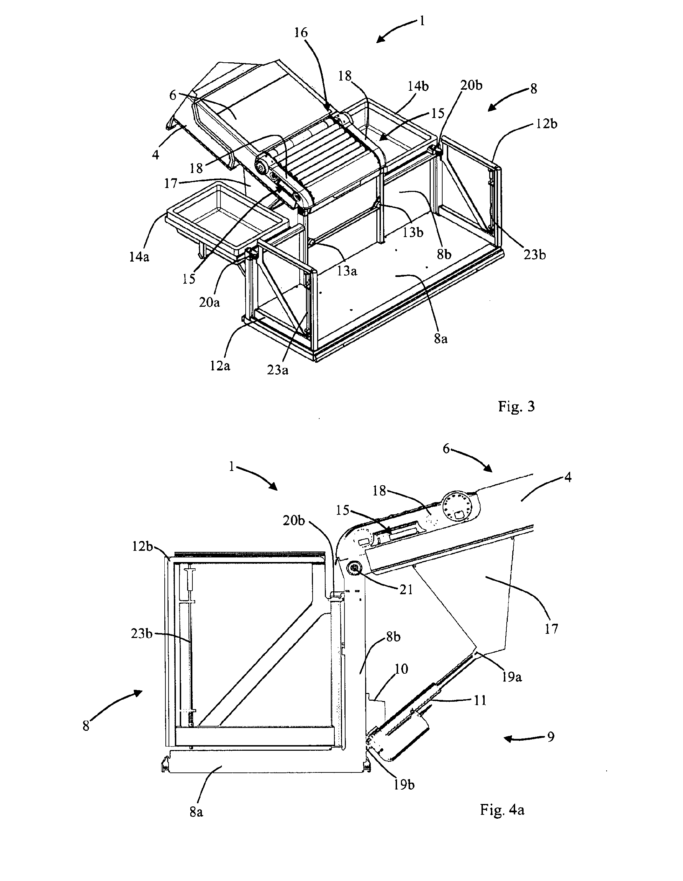

As can also be taken from Figs. 2a, 2b and 3, the gyro platform 8 has a bottom 8a and a rear element 8b as well as two side elements 12a and 12b, which are each formed as frames having a diagonal beam. The rear element 8b and the side elements 12a and 12b each extend vertically from the bottom 8a. The rear element 8a is located adjacent to the outmost end 4 and forms a "wall", i.e. a limitation at the rear end of the gyro platform 8. Hence, the side elements 12a and 12b and the rear element 8a form a limitation at three sides of the gyro platform 8 in order to hinder personnel from falling off the gyro platform 8. Only the front side of the gyro platform 8 is open in this embodiment. However, in other embodiments, also the front side of the gyro platform 8 can be limited by respective (pivotable, removable) front elements.

Additionally, two storage bins 14a and 14b are attached to the rear element 8b of the gyro platform 8. Personnel can put articles, tools or other items into the storage bins 14 and 14b.

The belt 6 does not extend to the outmost end of the outmost section 4, but ends spaced apart therefrom. Next to the end of the belt 6, a couple of pop-out rollers 16 are located, such that articles which are conveyed by the belt 6 can roll over the pop-out rollers 16.

Moreover, on each side of the outmost section 4 a sidepart 18 is provided which is adapted for controlling the extendable conveyor. The sidepart 18 includes a control 15 which can have a keyboard, a navigation pad for controlling movement of the belt 6 and of the whole extendable conveyor 1 as well as elements for controlling other functions, such as switching on/off lights for illumination the gyro platform 8, etc. The sideparts 18 with its controls 15 are mechanically connected to the outmost section 4 and they are electrically connected to an internal electric and data bus system of the extendable conveyor 1, e.g. a modbus.

The control 15 is such located that personnel on the gyro platform 8 can reach it and can control the extendable conveyor 1 while standing on the gyro platform 8. As the gyro platform 8 is kept horizontally by the inclination adjuster 9 independent from the inclination of the base unit 2 and the intermediate 3a and 3b and outmost sections 4, personnel can comfortable stand on the gyro platform 8.

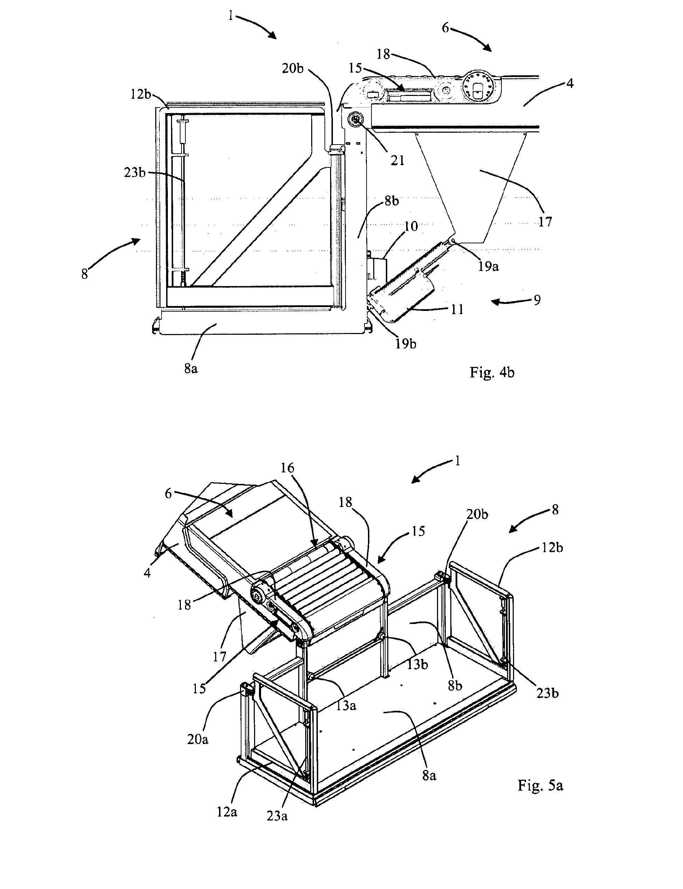

As can also be taken from Figs. 4a and 4b, the inclination adjuster 9 has a linear actor 11 which is connected via a first pivot joint 19a to a frame 17 which is in turn mounted to the bottom of outmost section 4. At the opposite end, linear actor 11 is connected via a second pivot joint 19b at a lower portion of the gyro platform 8. Additionally, the inclination adjuster 9 has a control with an inclination sensor, such as a gyro sensor which are located in a common housing 10 attached at the rear element 8b of the gyro platform 8 (therefore, in the following the control and the gyro sensor are both denoted with reference sign "10"). Moreover, the gyro platform 8 is connected via a pivot joint 21 to the outmost end of the outmost section 4.

The inclination adjuster 9 (i.e. its control 10) receives inclination signals from its gyro sensor 10 and controls the linear actuator 11 accordingly. The angle between the gyro platform 8 and the outmost section 4 can be adjusted by adapting the length of the linear actuator 11, as can also be taken from Figs. 4a and 4b. Hence, the inclination adjuster 9 provides an automatic and self-alignment of the gyro platform 8, such that the gyro platform 8 is kept horizontal (or at any other predefined inclination), as also discussed above.

In Fig. 4a, the outmost section 4 is inclined and the linear actuator 11 has a longer extension compared to the situation of Fig. 4b where the outmost section 4 is horizontal, and, thus, the angle between the gyro platform 8 and the outmost section 4 is roughly 90°. Hence, by increasing the extension of the linear actuator 11, the angle between the gyro platform 8 and the outmost section 4 is increased and by decreasing the extension of the linear actuator 11, the angle between the gyro platform 8 and the outmost section 4 is decreased. Thus, by adapting the extension of the linear actuator 11 in response to the inclination signal received from the gyro sensor, the control 10 can keep the gyro platform 8 horizontally aligned.

For simplification reasons, Fig. 4b shows linear actuator 11 in its nearly fully retracted position when the outmost section 4 is horizontally aligned. Of course, the present invention is not limited in that regard and the linear actuator 11 can be, for example, in its middle position (or any other position) when the outmost section 4 is horizontally aligned, such that the linear actuator 11 is able to further retract, for example, when the outmost section 4 is raised, and, thus, the angle between the gyro platform 8 and the outmost section 4 becomes smaller than 90°. Hence, in some embodiments, the linear actuator 11 is adapted to hold the gyro platform 8, e.g. horizontally, in both cases that the base unit 2, and, thus, the outmost section 4 is lowered and raised.

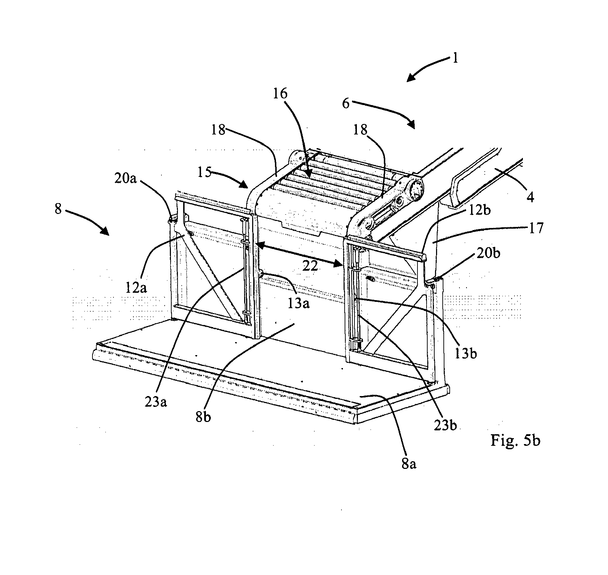

As can also be taken from Figs. 5a and 5b, the side elements 12a and 12b are connected via a pivot joint 20a and 20b, respectively, to the rear element 8b of the gyro platform 8.

Fig. 5a shows the side elements 12a and 12b in a working position, in which they extend along on each side of the gyro platform 8 and thereby limit the sides of the gyro platform 8. In the working position, the side elements 12a and 12b via a spring biased bar 23a and 23b, respectively, engaging into a hole in the bottom 8a.

The side elements 12a and 12b can be pivoted into a parking position as shown in Fig. 5b, in which they extend parallel to the rear element 8b and, thus, do not form a limitation at the sides of the gyro platform 8. Magnets 13a and 13b located at the inner side of the rear element 8 are such positioned that a vertical outer frame element of the side elements 12a and 12b each abuts against a corresponding magnet 13 and 13b, respectively. Thereby, magnets 13a and 13b hold the side elements 12a and 12b in their parking position.

When the side elements 12a and 12b are in their parking position, a working gap 22 is provided between them which has a width which is similar to the width of the conveying surface 6. Hence, the side elements 12a and 12b do not form an obstacle for personnel (un)loading articles when the side elements 12a and 12b are in the parking position.

As is also shown in Fig. 1b, as the side elements 12a and 12b are "folded" back to the rear element 8b in the parking position, the bottom 8a of the gyro platform 8 needs less room than in the case that the side elements 12a and 12b are in their working position.

## Claims

1. An extendable conveyor for conveying articles, said conveyor comprising:
a base unit (2);
at least one mechanically extendable section (3a, 3b, 4), which is adjustably positionable incrementally between a fully nested position within the base unit (2) and a fully extended position telescoped forwardly from the base unit (2), wherein one of the at least one mechanically extendable section (3a, 3b, 4) is an outmost mechanically extendable section (4);
a frame (5) to which the base unit (2) is connected and which is adapted to adjust an inclination of the base unit (2) and of the at least one mechanically extendable section (3a, 3b, 4);
a conveying surface (6) for conveying articles extending at least partially on an upper side of the at least one mechanically extendable section (3a, 3b, 4);
a platform (8), which is connected to the outmost mechanically extendable section (4); and
an inclination adjuster (9) adapted to adjust the inclination of the platform (8) with respect to the inclination of the outmost mechanically extendable section (4).

2. The extendable conveyor of claim 1, wherein the inclination adjuster (9) is adapted to adjust the inclination of the platform (8) in a horizontal orientation.

3. The extendable conveyor of anyone of the preceding claims, wherein the inclination adjuster (9) includes an inclination sensor (10) adapted to detect a deviation from a horizontal alignment.

4. The extendable conveyor of claim 3, wherein the inclination sensor (10) includes a gyro sensor.

5. The extendable conveyor of claim 3 or 4, wherein the inclination sensor (10) is located at the platform (8).

6. The extendable conveyor of claim 5, wherein the inclination adjuster (9) includes a control which is located together with the inclination sensor (10) in a housing at the platform (9).

7. The extendable conveyor of anyone of the preceding claims, wherein the inclination adjuster (9) includes an actuator (11) adapted to adjust an angle between the platform (8) and the outmost mechanically extendable section (4).

8. The extendable conveyor of anyone of claims 3 to 7, wherein the inclination adjuster (9) is adapted to control the actuator (11) in response to the deviation from a horizontal alignment detected by the inclination sensor (10).

9. The extendable conveyor of anyone of the preceding claims, wherein the platform (8) includes at least one side element (12a, 12b).

10. The extendable conveyor of claim 9, wherein the at least one side element (12a, 12b) is pivotable from a working position into a parking position.

11. The extendable conveyor of claim 10, wherein the platform (8) includes two side elements (12a, 12b) defining a working gap (22) when being in the parking position.

12. The extendable conveyor of claim 11, wherein the working gap (22) is adapted to a width of the conveying surface (6).

13. The extendable conveyor of anyone of the preceding claims, wherein the platform (8) includes at least one storage bin (14a, 14b).

14. The extendable conveyor of anyone of the preceding claims, wherein the outmost mechanically extendable section (4) includes a control (15) adapted to control the extension and/or the inclination of the base unit (2) and the at least one mechanically extendable section (3a, 3b, 4).

15. The extendable conveyor of claim 14, wherein the control (15) is such located at the outmost mechanically extendable section (4) that it can be operated from the platform (8).
